Europäisches Patentamt

European Patent Office

Office européen des brevets

(11) Veröffentlichungsnummer : **0 143 943**
**B1**

## (12) EUROPÄISCHE PATENTSCHRIFT

(45) Veröffentlichungstag der Patentschrift :
15.03.89

(21) Anmeldenummer : 84111862.3

(22) Anmeldetag : 04.10.84

(51) Int. Cl.⁴ : **H 02 P   7/36**

(54) Einrichtung zur Drehzahlsteuerung bei Wechsel- und Drehstrommotoren.

(30) Priorität : 01.12.83 DE 3343434

(43) Veröffentlichungstag der Anmeldung :
12.06.85 Patentblatt 85/24

(45) Bekanntmachung des Hinweises auf die Patenterteilung : 15.03.89 Patentblatt 89/11

(84) Benannte Vertragsstaaten :
AT BE CH DE FR GB IT LI LU NL SE

(56) Entgegenhaltungen :
WO—A—84 /004 51
AT—B—   329 690
US—A— 3 906 316
US—A— 4 276 506
PATENT ABSTRACTS OF JAPAN, Band 5, Nr. 82 (E-59)[154], 29. Mai 1981; & JP - A - 56 29494

(73) Patentinhaber : Röhrnbacher, Emmerich
Waldteufelweg 10
D-7506 Bad Herrenalb 2 (DE)

(72) Erfinder : Röhrnbacher, Emmerich
Waldteufelweg 10
D-7506 Bad Herrenalb 2 (DE)

(74) Vertreter : Geitz, Heinrich, Dr.-Ing.
Postfach 2708 Kaiserstrasse 156
D-7500 Karlsruhe 1 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung zur Drehzahlsteuerung bei Wechsel- und Drehstrommotoren mit einem nach dem Prinzip der Phasenanschnittsteuerung arbeitendem Steuergerät im Versorgungskreis des hinsichtlich seiner Drehzahl zu regelnden Motors und mit einem zu dem Steuergerät parallel geschalteten spannungsmindernden Schaltelement.

Bei einer bekannten Einrichtung dieser Art, die in der US-PS 4 276 506 beschrieben ist, liegt in Parallelschaltung zu einem Triac ein RC-Glied, zu dem wiederum ein Varistor parallel geschaltet ist. Das parallel zum Triac geschaltete RC-Glied dient zur Entstörung auftretender Spannungsspitzen und der Varistor wirkt als Überspannungsbegrenzer. Es handelt sich insoweit um eine typische Schaltung zum Unterdrücken von Spannungsspitzen.

Bekannt ist auch eine Anlaßschaltung für einen Motor mit einer parallel zu einem Triac geschalteten Drossel (US-PS 3 906 316), die der Strombegrenzung während der Anlaufphase des Motors dient, hingegen beim Erreichen der Motor-Nenndrehzahl durch das Triac überbrückt wird. Eine ganz ähnliche Anordnung findet sich auch bei einem Dreiphasen-Drehstrom-Steuerkreis, der in der JP-A-56 29 494 beschrieben ist. Ferner ist aus der AT-PS 329 690 eine Phasenanschnitt-Drehzahlsteuerschaltung mit einem parallel zu einem Triac oder Thyristorpaar geschalteten RC-Glied bekannt, das als Entstörglied bzw. zum Ausräumen des Triacs oder der Thyristoren während des Spannungs-Nulldurchgangs dient.

Unbeschadet der bei den oben erläuterten Einrichtungen verwirklichten Entstörmaßnahmen haften der Phasenanschnittsteuerung Unzulänglichkeiten an, die deren Anwendung häufig erschweren. So treten infolge des zweifachen Anschnitts einer jeden Sinuswelle erhebliche Induktions-Spannungsspitzen mit doppelter Netzfrequenz auf, die ein höchst unerwünschtes Motorbrummen verursachen. Auch wirken die durch die Phasenanschnitte verursachten Spannungsspitzen auf die Versorgungsnetze zurück und können sich der Netzfrequenz als Oberwellen überlagern. Naturgemäß kann dies zu starken Störeffekten bei Rundfunk- und Fernsehempfängern führen, die durch die bei dem oben erläuterten Stande der Technik verwirklichten Maßnahmen nicht beseitigbar sind und sehr aufwendige Entstörungsmaßnahmen erforderlich machen. Schließlich wurde aber auch eine nicht unbeachtliche thermische Belastung bei Motoren mit Drehzahlveränderung mittels Phasenanschnittsteuerung festgestellt.

Aus der nachveröffentlichten, aber prioritätsälteren Euro-PCT-Anmeldung WO/A-84/00451 ist auch schon eine Einrichtung zum Steuern der Drehzahl eines Asynchronmotors mit einem elektronisch arbeitenden Steuergerät im Versorgungskreis des zu steuernden Motors und einem in Parallelschaltung zu einem elektronischen Schalter liegenden spannungsmindernden Schaltelement bekannt. Das Steuergerät dieser Einrichtung arbeitet jedoch nicht nach dem Prinzip der Phasenanschnittsteuerung, sondern in Abhängigkeit von Ausgangssignalen einer Steuerschaltung wird bei einer gewünschten Drehzahländerung in jede Stromzuführung zum Asynchronmotor eine Drossel ein- bzw. ausgeschaltet, und zwar in Serie zu der jeweiligen Motorwicklung, im Bedarfsfalle können aufeinanderfolgend auch mehrere Drosseln in Serie zueinander und zu der Motorwicklung in deren Stromzuführung einbzw. aus dieser ausgeschaltet werden. Mittels dieser Motorsteuereinrichtung sollen die Motorgeräusche und die erzeugte Verlustwärme reduziert werden, wofür es jedoch bei der vorbekannten Einrichtung eines unverhältnismäßig großen schaltungstechnischen Aufwandes bedarf.

Die Erfindung geht daher von der vorbekannten Phasenanschnittsteuerung zur Drehzahleinstellung bei Wechsel- oder Drehstrommotoren aus und die Erfindungsaufgabe besteht darin, die bei diesem Stande der Technik zu beobachtenden Unzulänglichkeiten zu beseitigen oder jedenfalls zu vermindern und eine gegenüber dem aufgezeigten Stande der Technik verbesserte Einrichtung für den genannten Zweck zu schaffen.

Diese Aufgabe ist erfindungsgemäß dadurch gelöst, daß bei der im Oberbegriff des Patentanspruchs 1 angegebenen Einrichtung das parallel zu dem nach dem Prinzip der Phasenanschnittsteuerung arbeitenden Steuergerät angeordnete spannungsmindernde Schaltelement eine Mindestdrehzahl bei unwirksamer Phasenanschnittsteuerung des Motors bestimmt und daß die Phasenanschnittsteuerung erst bei Drehzahlen oberhalb der Mindestdrehzahl wirksam wird.

Der Erfindung liegt die Überlegung zugrunde, bei einer eingestellten Mindestdrehzahl des Motors dessen Spannungsversorgung ohne jeden Phasenanschnitt allein über das in Parallelschaltung zu dem Steuergerät liegende spannungsmindernde Schaltelement zu bewerkstelligen, wobei keine Änderung des sinusförmigen Spannungsverlaufs eintritt, sondern lediglich eine Reduzierung der Spannungsamplituden.

Bei dem in Parallelschaltung zu dem Steuergerät liegenden spannungsmindernden Schaltelement kann es sich in zweckmäßiger Ausgestaltung der Erfindung um eine Drossel, einen Kondensator oder, bei geringen Motorleistungen, auch einfach um einen Widerstand handeln.

Die durch den Einsatz des spannungsmindernden Schaltelementes in Parallellage zu dem Steuergerät bewirkte Reduzierung der Spannungsamplituden bei unverändert sinusförmigem Spannungsverlauf hat einen äußerst ruhigen Motorlauf zur Folge, und die bei Verwendung einer Drossel oder eines spannungsfesten Kondensators als spannungsminderndes Schaltelement auftretenden Energieverluste sind vernachlässigbar gering. Erst beim Steuern der Drehzahl über die von dem spannungsmindernden Schaltelement vorgegebene Mindestdrehzahl hinaus findet ein Phasenanschnitt statt, der jedoch darum im Vergleich zur herkömmlichen Phasenanschnittsteuerung nur geringe Induktions-Spannungsspitzen auslösen kann, weil von der durch das spannungsmindernde Schaltelement vorgegebenen Grundlast aus geschaltet wird.

Dadurch ist auch im Drehzahl-Verstellbereich ein ruhiger Motorlauf gewährleistet. Darüber hinaus sind im Vergleich zu der reinen Phasenanschnittsteuerung die Geräuschentfaltung und die thermische Belastung der Motoren erheblich reduziert. Es ist auch ein geringerer Entstörungsaufwand erforderlich, eben weil nur die Differenz zwischen der Grundlast und der vollen Netzspannung geschaltet wird.

Selbstverständlich können erfindungsgemäße Einrichtungen zur Drehzahlsteuerung bei Wechselstrommotoren und Drehstrommotoren Verwendung finden, wobei im Falle von Drehstromantrieben in jeder Phase des Motor-Versorgungskreises ein spannungsminderndes Schaltelement angeordnet ist.

Nachstehend soll eine Ausführungsform der Erfindung anhand der beigefügten Zeichnung näher erläutert werden. In schematischen Ansichten zeigen :

Fig. 1 in einem Schaltbild die Anwendung der Erfindung auf einen Einphasen-Wechselstrommotor mit einer in Parallelschaltung zu einem Steuergerät zur Phasenanschnittsteuerung im Motor-Versorgungskreis angeordneten Drossel,

Fig. 2 den Verlauf der am Motor anliegenden Spannung bei Mindestdrehzahl, also bei Spannungsversorgung des Motors allein über die Drossel, und im Vergleich dahzu den Verlauf der Netzspannung,

Fig. 3 den Verlauf der am Motor anliegenden Spannung bei wirksamer Phasenanschnittsteuerung mit zu dem Steuergerät parallel geschalteter Drossel und

Fig. 4 die bei reiner Phasenanschnittsteuerung am Motor anliegende Spannung und die auftretenden Induktions-Spannungsspitzen.

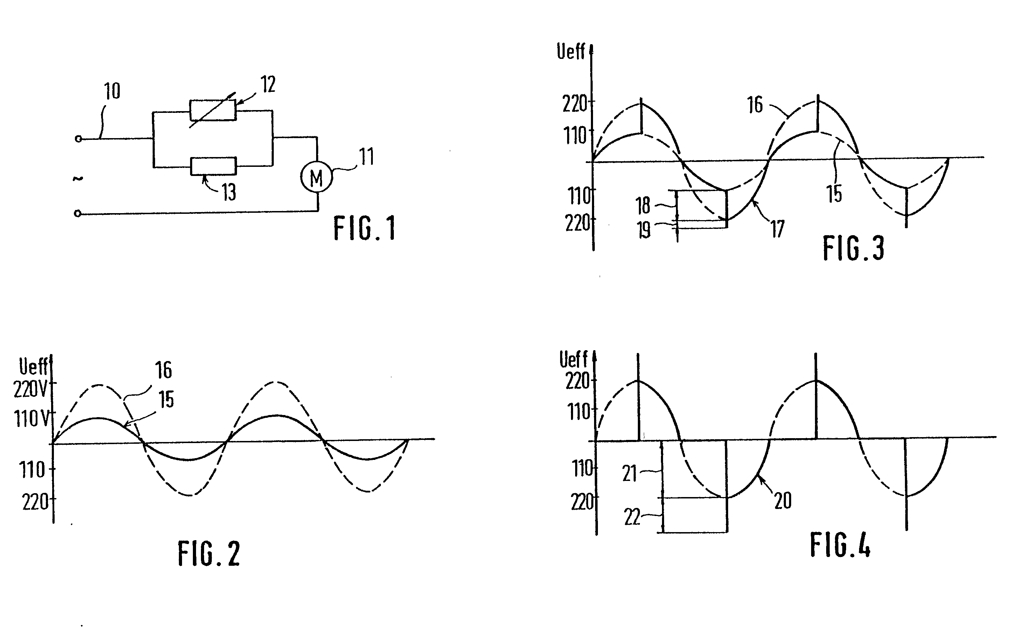

Bei der Schaltung nach Fig. 1 ist im Versorgungszweig 10 eines hinsichtlich seines Aufbaues im einzelnen hier nicht interessierenden Ein-Phasenwechselstrommotors 11 ein herkömmliches Phasenanschnitt-Steuergerät 12 zur stufenlosen Drehzahleinstellung des Motors angeordnet und in Parallellage dazu liegt eine bekante Drossel 13 mit auf die Leistungsaufnahme des Motors abgestimmten Leistungsdaten, deren Auslegung die Mindestdrehzahl des Motors bei völlig unwirksamer Phasenanschnittsteuerung bestimmt. Die bei wirkungsloser Phasenanschnittsteuerung am Motor 11 anliegende Spannung zeigt die Spannungskurve 15 in Fig. 2, hingegen die unbeeinflußte Netzspannung die Spannungskurve 16.

Die allein durch die parallel zu dem Steuergerät 12 geschaltete Drossel bestimmte Spannungskurve 15 in Fig. 2 ist rein sinusförmig bei gegenüber der Netzspannung nach der Spannungskurve 16 abgeflachten Amplituden. Angesichts des rein sinusförmigen Verlaufs der Spannungskurve 15, die insoweit mit der die Netzspannung repräsentierenden Spannungskurve 16 übereinstimmt, ist ein extrem ruhiger Motorlauf bei Mindestdrehzahl gewährleistet und die in der Drossel 13 allenfalls auftretenden Ummagnetisierungsverluste sind klein.

Den Motorbetrieb mit gegenüber der Mindestdrehzahl erhöhter Drehzahl charakterisiert die in vollen Linien ausgezogene Spannungskurve 17 in Fig. 3, in der die der Grundlast bei Mindestdrehzahl entsprechende Spannungskurve 15 und die der Netzspannung entsprechende Spannungskurve 16 in dünnen Strichlinien eingetragen sind. Die Spannungskurve 17 verläuft über einen Teil einer jeden Halbwelle identisch mit der Spannungskurve 15, um dann infolge Phasenanschnittsteuerung bei 18 auf die Netzspannung gemäß der Spannungskurve 16 anzusteigen. Die Phasenanschnittsteuerung schaltet mithin lediglich von der durch die Spannungskurve 15 gegebenen Grundlast auf die Netzspannung und mithin um einen gegenüber der reinen Phasenanschnittsteuerung ohne zum Steuergerät parallel geschalteter Drossel um einen reduzierten Spannungsbetrag. Beim Schalten von Grundlast auf Netzspannung treten Induktions-Spannungsspitzen auf, die in Fig. 3 bei 19 angedeutet sind.

Die in vollen Linien ausgezogene Spannungskurve 20 in Fig. 4 veranschaulicht hingegen den Motorbetrieb bei reiner Phasenanschnittsteuerung, also ohne parallel zum Steuergerät geschalteter Drossel. Die Phasenanschnittpunkte sind zeitgleich wie in Fig. 3 gewählt. Bei 21 ist der Spannungsanstieg vom Betrage 0 auf die Netzspannung angedeutet. Es ist ersichtlich, daß dabei ein ungleich größerer Spannungssprung als beim Schalten von der durch die Spannungskurve 15 charakterisierten Grundlast auf Netzspannung eintritt. Angesichts dieses erhöhten Spannungssprunges treten bei reiner Phasenanschnittsteuerung auch wesentlich größere Induktions-Spannungsspitzen auf, die in Fig. 4 mit 22 bezeichnet sind.

Angesichts der bei der erfindungsgemäßen Steuerung in den Schaltpunkten gegenüber reiner Phasenanschnittsteuerung reduzierten Spannungssprünge im jeweiligen Schaltpunkt ist ein vergleichsweise ruhiger Motorbetrieb bei stark reduzierter Geräuschentfaltung gewährleistet. Da erfindungsgemäß auch die in den Schaltpunkten auftretenden Induktions-Spannungsspitzen 19 gegenüber den Induktions-Spannungsspitzen 22 bei reiner Phasenanschnittsteuerung stark reduziert sind, treten vergleichsweise geringe Rückwirkungen auf das Netz ein, was gleichbedeutend mit einer erheblichen Reduzierung von Störeinflüssen ist. Demgemäß sind bei der Erfindung Entstörmaßnahmen entbehrlich oder im Vergleich zum reinen Phasenanschnittbetrieb erheblich reduziert.

**Patentansprüche**

1. Einrichtung zur Drehzahlsteuerung bei Wechsel- und Drehstrommmotoren, mit einem nach dem Prinzip der Phasenanschnittsteuerung arbeitenden Steuergerät (12) im Versorgungskreis des hinsichtlich seiner Drehzahl zu steuernden Motors (11) und mit einem zu dem Steuergerät (12) parallel geschalteten spannungsmindernden Schaltelement (13), dadurch gekennzeichnet, daß das in Parallelschaltung zu dem Steuergerät (12) angeordnete Schaltelement (13) eine Mindestdrehzahl des Motors (11) bei unwirksamer Phasenanschnittsteuerung bestimmt und daß die Phasenanschnittsteuerung erst bei Drehzahlen oberhalb der Mindestdrehzahl wirksam wird.

2. Einrichtung nach Anspruch 1, dadurch gekennzeichnet, daß als spannungsminderndes Schaltelement eine Drossel (13) parallel zum Steuergerät (12) in den Versorgungskreis eingeschaltet ist.

3. Einrichtung nach Anspruch 1, dadurch gekennzeichnet, daß als spannungsminderndes Schaltelement (13) ein Kondensator parallel zum Steuergerät (12) in den Motor-Versorgungskreis eingeschaltet ist.

4. Einrichtung nach Anspruch 1, dadurch gekennzeichnet, daß als spannungsminderndes Schaltelement (13) ein Widerstand parallel zum Steuergerät (12) im Motor-Versorgungskreis angeordnet ist.

5. Einrichtung nach einem der Ansprüche 1 bis 4, dadurch gekennzeichnet, daß bei Drehstromantrieben in jeder Phase des Motor-Versorgungskreises ein spannungsminderndes Schaltelement in Parallelschaltung zu dem Steuergerät angeordnet ist.

## Claims

1. Equipment, for the control of rotational speed in single-phase and polyphase alternating current motors, with a control device, which operates on the principle of the conduction phase control, in the supply circuit of the motor to be controlled in respect of its rotational speed and with a voltage-reducing switching element connected in parallel with the control device, characterised thereby, that the switching element (13) arranged in parallel connection with the control device (12) determines a minimum rotational speed of the motor (11) when the conduction phase control is ineffective and that the conduction phase control becomes effective only at rotational speeds above the minimum rotational speed.

2. Equipment according to claim 1, characterised thereby, that a choke (13) is connected, as voltage-reducing switching element in parallel with the control device (12), into the supply circuit.

3. Equipment according to claim 1, characterised thereby, that a capacitor is connected, as voltage-reducing switching element in parallel with the control device (11), into the motor supply circuit.

4. Equipment according to claim 1, characterised thereby, that a resistor is connected, as voltage-reducing switching element in parallel with the control device (12), into the motor supply circuit.

5. Equipment according to one of the claims 1 to 4, characterised thereby, that in the case of polyphase alternating current drives, a voltage-reducing switching element is arranged in parallel connection with the control device in each phase of the motor supply circuit.

## Revendications

1. Installation pour la commande de la vitesse de rotation de moteurs à courant alternatif mono ou triphasé, incluant un appareil de commande fonctionnant selon le principe du retard de phase dans le circuit d'alimentation du moteur dont la vitesse de rotation doit être commandée et un élément de commutation réducteur de tension monté en parallèle avec l'appareil de commande, caractérisée en ce que l'élément de commutation (13), monté en parallèle avec l'appareil de commande (12), commande une vitesse de rotation minimum du moteur (11) en cas de commande par retard de phase inefficace et en ce que la commande par retard de phase n'agit que lorsqu'une vitesse de rotation supérieure à la vitesse de rotation minimum est atteinte.

2. Installation selon la revendication 1. caractérisée en ce que l'élément de commutation réducteur de tension consiste en une bobine d'arrêt (13) connectée en parallèle à l'appareil de commande (12).

3. Installation selon la revendication 1. caractérisée en ce que l'élément de commutation réducteur de tension (13) consiste en un condensateur connecté en parallèle à l'appareil de commande (12).

4. Installation selon la revendication 1., caractérisée en ce que l'élément de commutation réducteur de tension (13) consiste en une résistance connectée en parallèle à l'appareil de commande (12).

5. Installation selon l'une des revendications 1. à 4., caractérisée en ce qu'un élément de commutation réducteur de tension est connecté en parallèle avec l'appareil de commande dans chaque phase d'alimentation du moteur dans le cas d'un moteur triphasé.

FIG.1

FIG.2

FIG.3

FIG.4